# EUROPEAN PATENT SPECIFICATION

(11) **EP 4 149 638 B1**
(45) Date of publication and mention of the grant of the patent: **05.06.2024**
(21) Application number: 21716220.5
(22) Date of filing: 07.04.2021
(51) Int. Cl.: A62C 2/06

(54) **FIRESTOP COLLAR**
BRANDSCHUTZMANSCHETTE
COLLIER COUPE-FEU

(30) Priority: 15.05.2020 NL 2025589
(43) Date of publication of application: 22.03.2023
(73) Proprietor: J. van Walraven Holding B.V., 3641 RK Mijdrecht (NL)
(72) Inventor: NIJDAM, Frank, 3893 BA ZEEWOLDE (NL); JUZAK, Marek, 3641 TK MIJDRECHT (NL)
(74) Representative: EP&C
(86) International application number: PCT/EP2021/059022
(87) International publication number: WO 2021/228472

(56) References cited:
- EP-A1- 0 486 299
- WO-A1-2016/186486
- US-A- 5 887 396

## Description

The present invention relates to a firestop collar for arrangement around a duct at a passage through a partition, the firestop collar comprising an outer casing of sheet metal and an inner lining of intumescent material. The outer casing has a first end portion and a second end portion adapted to be mutually connected so as to maintain the firestop collar in a closed position around the duct. A locking member is formed integrally with the casing at the first end portion and a catch member is integrally formed with the casing at the second end portion. The catch member comprises a sheet metal strip extending spaced apart from the outer surface of the casing to define a slot between the catch member and the outer surface of the casing. The first end portion is adapted to extend through the slot such that the locking member is located beyond the catch member to interlock the first and second end portions in the closed position of the collar.

Such a firestop collar is known from US 5.887.396. In one end portion of the known firecollar a strip of casing material is cut on two sides and bent out of the surface of the casing so as to form a slot. The strip remains connected on two ends to the casing. On the other end portion of the casing a tongue is formed which fits in the slot. Resilient detent tabs are formed in the tongue by generally U-shaped cuts and then bending them out of the surface of the tongue. The detent tabs can elastically deflect inwards as they pass through the slot and engage the strip. Once the detent tabs have moved through the slot they can return to their original raised position to prevent the tongue to be withdrawn from the slot.

This known firestop collar requires that the casing must be made of a relatively thin sheet metal to be able to bend the sheet metal strip out of the casing surface. Furthermore the sheet metal must be resilient to allow the detent tabs to deflect and return to their raised position. Such a thin walled casing is not suitable for all firestop applications as for example in larger diameter applications the thin sheet metal detent tabs will not be able to withstand the radial expansion forces when the intumescent material swells in case of a fire.

The invention has for an object to provide a firestop collar with more sturdy connection of the first end portion and second end portion whilst providing an easy to close firestop collar.

This object is achieved by a firestop collar for arrangement around a duct at a passage through a partition, the firestop collar comprising an outer casing of sheet metal and an inner lining of intumescent material, wherein the outer casing has a first end portion and a second end portion adapted to be mutually connected so as to maintain the firestop collar in a closed position around the duct, wherein a locking member is formed integrally with the casing at the first end portion and a catch member is integrally formed with the casing at the second end portion, wherein the catch member comprises a sheet metal strip extending spaced apart from the outer surface of the casing to define a slot between the catch member and the outer surface of the casing, and wherein the first end portion is adapted to extend through the slot such that the locking member is located beyond the catch member to interlock the first and second end portions in the closed position of the collar, wherein the sheet metal strip has one free end and one end integrally connected to the casing by a flexible connection portion, wherein the locking member comprises a hook member adapted to hook behind a rear end edge of the sheet metal strip.

According to the invention the sheet metal strip is only connected on one end to the casing, whereby it can flex away or be bent away from the casing surface to allow the locking member to pass the sheet metal strip. In particular the strip can flex in the direction pependicular to the plane of the strip. Once the locking member is moved beyond the sheet metal strip, the sheet metal strip can flex or be bent towards the casing and the hook member is caught behind the strip thereby interlocking the first and second end portion in the closed position. The strip will be loaded by the locking member engaging its edge if there is a pull force on the connection, e.g. in case of swelling intumescent material in a fire. This load is in the plane of the strip in which direction the strip has a relatively high stiffness and strength, whereby the connection will not break. Furthermore this arrangement with a one sided connection of the strip and the casing still provides sufficent flexibility even if the casing is made of relatively thick sheet metal, which in general is better to retain the intumescent material in the collar.

According to a first aspect the catch member is formed monolithically at one of an upper or lower edge of the casing and folded over the outer side of the casing to define the slot between the catch member and the outer surface of the casing. The catch member including the connection portion may be elastically deformable.The locking member may be adapted to push the strip away and flex it, for example by providing it with some kind of wedge shaped formation. The casing according to this aspect is in particular suitable to be be made of a resilient sheet metal, for example of spring steel. In particular in embodiments according to this first aspect the hook member may be formed protruding from the outer surface of the metal casing, and the locking member may have a height with respect to the outer surface of the casing which exceeds the width of the slot with respect to the outer surface of the casing.

In embodiments of the firestop collar according to the first aspect the first end portion may comprise a tongue configured to extend through the slot. In further possible embodiments the hook member may be formed as a nose formed on an upper or lower edge of the tongue and extending under an angle of 75°-105°, preferably perpendicular, relative to the outer surface of the casing. In particular the nose may have a ramp shaped front edge. Thereby the nose has a sort of wedge shape, which may be pushed in the slot and which flexes the strip gradually away from the surface as it progresses through the slot whereby the slot is widened and the locking member can pass through the slot. When the nose reaches a rear edge of the strip the resilience of the strip causes the strip to snap behind the nose, such that the nose is then caugt behind the strip as a hook.

According to a second aspect the catch member is formed monolithically at one of an upper or lower edge of the casing wherein the flexible connection portion allows it to be folded over the outer side of the casing to define the slot between the catch member and the outer surface of the casing. The casing of the collar according to this aspect may be made of thicker less resilient sheet metal. The user himself may bend the strip away from the surface of the casing to allow the hook member to pass and may bend it towards the surface of the casing to catch the locking member behind the strip. Preferably the catch member including the connection portion is plastically deformable.

In embodiments according to the second aspect the hook member may be formed protruding from the outer surface of the metal casing. In a particular embodiment the first end portion may comprise a tongue configured to extend through the slot. The hook member may be formed as a nose formed on an upper or lower edge of the tongue and extending under an angle of 75°-105°, preferably perpendicular, relative to the outer surface of the casing. Once the tongue with the hook member has passed the strip, the strip can be bent towards the casing thereby reducing the gap between the strip and the casing and leaving a slot having a width smaller than the height of the nose. The nose is thus caught behind the sheet metal strip.

However, in other embodiments according to the second aspect the first end portion comprises a tongue configured to extend through the slot, and wherein at an end of the tongue remote from the casing a hook member is formed which is essentially flush with the tongue (thus not extending perpendicular). In a possible further embodiment a lug is formed at a rear edge of the sheet metal strip, which lug extends inwardly perpendicular to the strip and wherein in the second end portion an aperture is formed for receiving said lug, wherein the hook member in the closed position of the collar hooks behind the lug.

In a possible embodiment of the firestop collar the catch member has adjacent the free end of the sheet metal strip a transverse leg thereby forming with the strip a flat L-shape, which is substantially parallel to the outer surface of the casing. The transverse leg prevents the locking member to slide along the rear edge of the strip to the upper side and then escape from the catch at the free end of the strip.

Additionally a first lug may be formed at the corner portion of the L-shape, which first lug extends inwardly perpendicular to the flat L-shape, thereby defining a top edge of the slot, which first lug extends beyond an end edge of the second end portion.

Additionally a second lug may be formed on an edge of the transverse leg of the L-shape, which second lug extends inwardly perpendicular to the flat L-shape and wherein in the second end portion an aperture is formed for receiving the second lug.

In a preferred embodiment of the firestop collar a series of retaining tabs is formed on the upper edge of the casing for retaining the intumescent material in the collar in the axial direction. Preferably a retaining tab is also formed on the upper edge of the first end portion. In a further embodiment also on the lower edge of the casing a series of retaining tabs may be formed for retaining the intumescent material in the collar in the axial direction. The retaining tabs maintain the layer of intumescent material within the casing when the collar is mounted around a pipe or other duct. When in case of a fire the intumescent expands, the retaining tabs also partly block the intumescent from expanding in the axial direction of the pipe, whereby the pressure is focussed more in the radial direction where it is intended to go to compress the pipe and close of the passage through the partition.

The firestop collar according to the invention may have one casing with an intumescent lining, which is wrapped around the duct and the ends of the casing are connected. However also an embodiment having two collar halves is possible, wherein each collar half has a first end portion and at the opposite end a second end portion, wherein the first end portion of the one collar half is coupled to the second end portion of the other collar half, and the second end portion of the one collar half is coupled to the first end portion of the other collar half.

Further details of the firestop collar according to the invention will become clear from the following description with reference to the drawings, wherein:
Fig. 1 shows in a view in perspective an embodiment of a firestop collar according to the invention arranged around a pipe extending through a wall,
Fig. 2 shows in another view in perspective the fire collar of Fig. 1,
Fig. 3 illustrates in a top elevational view how the fire collar of Fig. 1 is assembled from two collar halves,
Fig. 4 shows in a view in perspective a first end portion of the firestop collar of Fig. 1,
Fig. 5 shows in a view in perspective a second end portion of the firestop collar of Fig. 1,
Fig. 6 illustrates how the end portions of Figs 4 and 5 are interconnected,
Fig. 7 shows the end portions of Figs 4 and 5 in a connected state,
Fig. 8 illustrates one half of the firestop collar of Fig. 1, but now while it is arranged around the pipe and inside the passage in the wall,
Fig. 9 shows in a view in perpective the firestop collar of Fig. 1, but now arranged around the pipe and inside the passage in the wall,
Fig. 10 shows in a view in perspective end portions of another embodiment of firestop collar while being interconnected,
Fig. 11 shows in a view in perspective the end portions of the collar of Fig. 10 in a connected state, and
Fig. 12 shows in a view in perspective another embodiment of a firestop collar according to the invention.

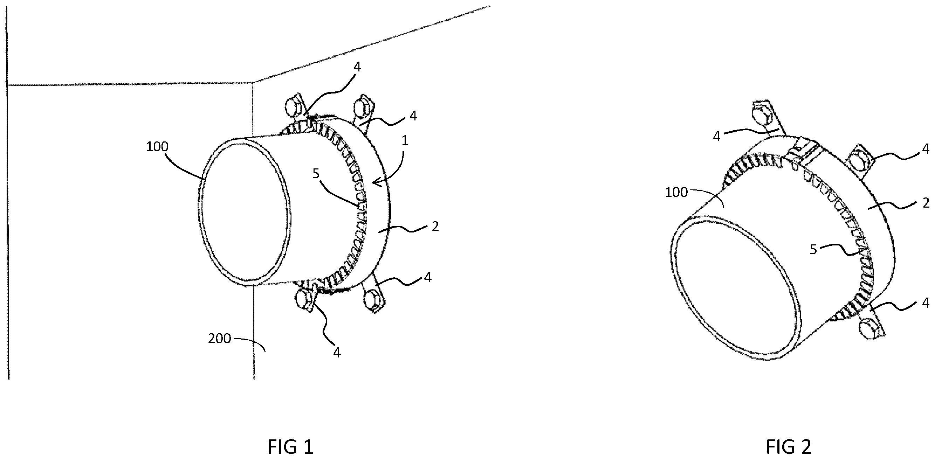

Firestop collars are arranged around ducts such as pipes at a passage through a partition to prevent fire and smoke to spread via the passage from one room to another room. In Fig. 1 is shown a firestop collar 1 according to the invention which is arranged around a plastic pipe 100 and attached to a wall 200.

The firestop collar 1 has a metal outer casing 2 and a layer of intumescent material 3 arranged on the inner side of the casing 2. In the event of a fire the heat causes the intumescent material to expand and compress the pipe 100 until it collapses, thereby closing the pipe 100 and the passage through the wall 200 where the pipe passes through the wall.

Fire and smoke are thus prevented to spread through the wall 200 from one room to the other.

The intumescent layer is preferably pre-arranged in the casing 2, but it may also be a separate layer which is wrapped around the pipe 100 wherein subsequently the casing 2 is arranged around the intumescent material.

The outer casing 2 is made of sheet metal and has generally a ring shape. On the outer side of the collar 1 radial flanges 4 are formed having a bore for passing through a male fastening element to fasten the collar to the wall 200 as is shown in Figs. 1 and 2.

Retaining tabs 5 are integrally formed on both edges of the casing 2, although they are only visible on the edge which is remote from the wall surface. The retaining tabs 5 extend radially inward and are for retaining the intumescent material in the collar 1 in the axial direction. The retaining tabs 5 maintain the layer of intumescent material within the casing 2 when the firestop collar 1 is mounted around the pipe 100. When in case of a fire the intumescent material expands, the retaining tabs 5 also partly block the intumescent from expanding in the axial direction of the pipe 100, whereby the pressure is focussed more in the radial direction where it is intended to go to compress the pipe 100 and close of the passage through the wall 200.

In this embodiment the collar 1 comprises two collar halves which are arranged on opposite sides of the pipe 100 and are then interconnected at dedicated end portions as will be further described hereinafter.

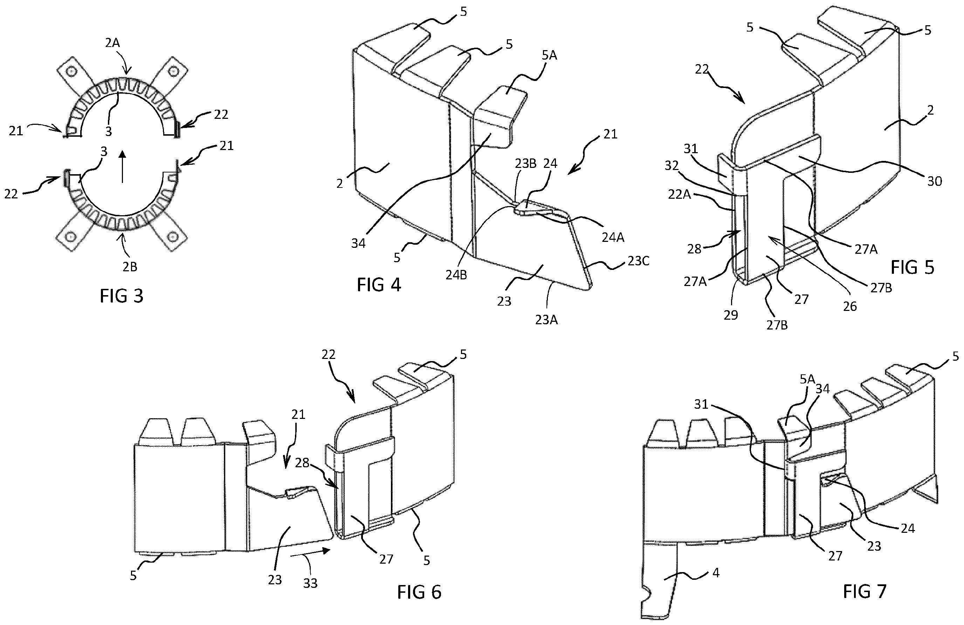

Fig. 3 shows clearly that the casing 2 has two casing halves 2A and 2B which each have a first end portion 21 and a second end portion 22. The first end portion 21 of the one casing half 2A is able to connect to the second end portion 22 of the other casing half 2B and vice versa.

In Fig. 4 the first end portion 21 is shown. This first end portion 21 comprises a tongue 23 which extends generally in the main direction of the casing 2 at the end. The tongue 23 has a lower edge 23A which is generally aligned with the lower edge of the casing 2. From the lower edge 23A the tongue 23 has a height which corresponds to about the half of the height of the casing 2. The tongue 23 has an upper edge 23B which in the height direction of the casing is located approximately the level of the middle of the height of the casing 2. On the upper edge 23B a nose 24 is formed which is bent outwardly, preferably perpendicular to the tongue 23, and thus projects in the radial direction. The nose 24 has a inclined leading edge 24A and a perpendicular trailing edge 24B.

The tongue 23 has an inclined leading edge 23C, which forms an angle of less than 90° with respect to the lower edge 23A. The lower corner of the tongue 23 thus projects the most forwardly.

In Fig. 5 the second end portion 22 is shown. A catch member 26 is integrally formed at the second end portion. In particular the catch member 26 is formed monolithically at a lower edge of the casing 2 and folded over the outer side of the casing 2 to define a slot 28 between the catch member 26 and the outer surface of the casing 2. The catch member 26 comprises a sheet metal strip 27 extending spaced apart from the outer surface of the casing 2 which defines the slot 28 between the catch member 26 and the outer surface of the casing 2. The sheet metal strip 27 has one free end 27A and one end 27B integrally connected to the casing by a flexible connection portion 29. Adjacent the free end 27A of the sheet metal strip 27 the catch member 26 has a transverse leg 30 thereby forming with the strip 27 a flat L-shape, which is substantially parallel to the outer surface of the casing 2. At the corner portion of the L-shape a first lug 31 is formed which extends inwardly perpendicular to the flat L-shape, thereby defining a top edge 32 of the slot 28. The first lug 31 extends beyond an end edge 22A of the second end portion 22.

The catch member 26 including the connection portion 29 is elastically deformable. Thereto the casing 2 is preferably made of a resilient steel grade such as a spring steel.

In Figs. 6 and 7 is illustrated how the firestop collar 1 is closed. The tongue 23 of the first end portion 21 is inserted in the slot 28 of the second end portion 22 as is indicated by arrow 33 in Fig. 6. Upon moving the tongue 23 through the slot 28 the leading edge 24A of the nose 24 will engage a front edge 27A of the sheet metal strip 27. Due to the ramp shape of the leading edge 24A of the nose 24 and the resilience of the strip 27 and the connection portion 29 the strip 27 is pushed away from the outer side of the casing 2 and the slot is widened gradually whereby the nose 24 can pass through the slot 28. When the nose 24 has moved beyond the strip 27, the strip 27 snaps back in its original position and the trailing edge 24B of the nose 24 hooks behind a rear edge 27B of the strip 27 as is illustrated in Fig. 7. In this state illustrated in Fig. 7 the first end portion 21 and the second end portion 22 are interlocked.

The first end portion 21 furthermore comprises a protrusion 34 which is located at a distance above the tongue. At an upper side of the protrusion 34 a retaining tab 5A is formed. In the closed state (cf. Fig. 7) the protrusion 34 extends over the lug 31, and the retaining tab 5A extends over the upper edge of the second end portion 22.

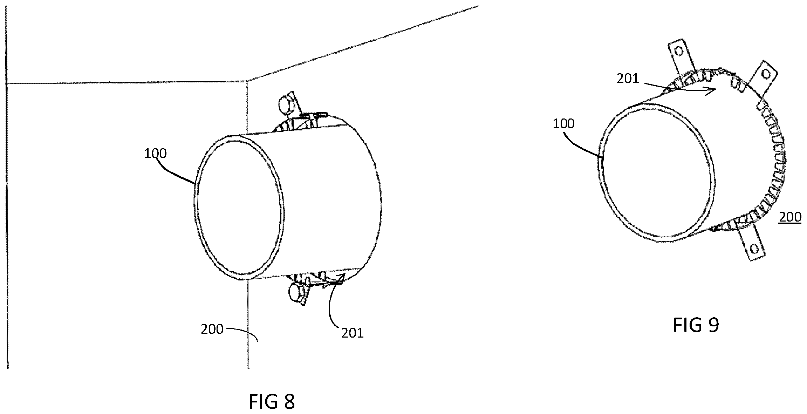

For illustrative purposes Fig. 8 shows only one half of the collar 1 which is arranged around the pipe 100, in the situation wherein the collar 1 is arranged in the passage 201 in the wall 200. Fig. 9 shows the entire collar 1 which is arranged around the pipe 100 and is arranged inside the passage 201. This is thus different from the situation shown in Figs. 1 and 2 where the collar 1 is arranged outside the passage and against the wall 200.

The above described embodiment of the firestop collar has a casing 2 which is made of spring steel. The casing 2 needs to be a relatively thin walled casing in order to provide sufficient resiliency for the nose 24 to push the sheet metal strip aside and for the strip 27 to return to its original position once the nose 24 has moved beyond the strip 27. However, also embodiments of firestop collars are possible within the scope of the present invention, wherein the casing is not made of a spring steel, or wherein the casing has a greater wall thickness.

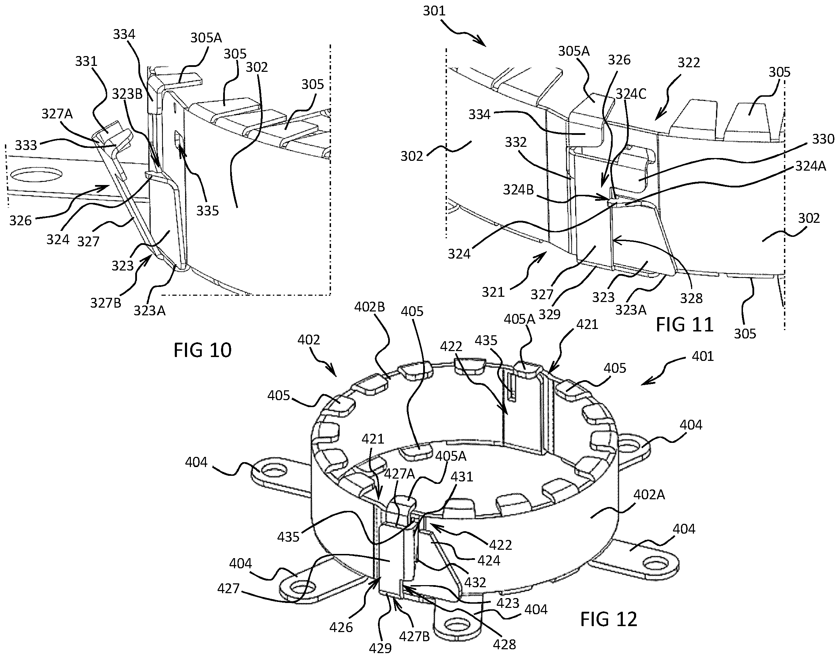

In Figs. 10 and 11 the interconnection of end portions 321 and 322 of a casing 302 of an embodiment of a firestop collar is illustrated, which is not made of spring steel, but of another grade of sheet metal. This firestop collar 301 is similar to the firestop collar 1.

The collar 301 has a casing 302 which may have two casing halves which each have a first end portion 321 and a second end portion 322. The first end portion 321 is able to connect to the second end portion 322 as is illustrated in Figs. 10 and 11.

The first end portion 321 comprises a tongue 323 which extends generally in the main direction of the casing 302 at the end. The tongue 323 has a lower edge 323A which is generally aligned with the lower edge of the casing 302. From the lower edge 323A the tongue 323 has a height which corresponds to about the half of the height of he casing 302. The tongue 323 has an upper edge 323B which in the height direction of the casing is located approximately the level of the middle of the height of the casing 302. On the upper edge 323B a nose 324 is formed which is bent outwardly, preferably perpendicular to the tongue 323, and thus projects in the radial direction. The nose 324 has a inclined leading edge 324A and a perpendicular trailing edge 324B.

A catch member 326 is integrally formed at the second end portion 322. In particular the catch member 326 is formed monolithically at a lower edge of the casing 302. The catch member 326 comprises a sheet metal strip 327 which has one free end 327A and one end 327B integrally connected to the casing 302 by a flexible connection portion 329. The sheet metal strip 327 is initially not fully folded over the outer side of the casing 302, but extends inclined as is shown Fig. 10. In this way there is a gap defined between the strip 327 and the outer side of the casing 302 such that the tongue 323 of the other end portion 321 having the extending nose 324 can pass the strip 327 without having to engage it. After the nose 324 has passed the strip 327 the user can push and bend the strip 327 towards the outer surface of the casing 302 such that a slot is created between the strip 327 and the outer surface of the casing 302, which slot has a width that is smaller than the height of the nose 324. Thereby the rear edge of the strip 327 can engage in the undercut at the trailing edge 324B of the nose 324. The trailing edge 324B of the nose 324 may be provided with a notch 324C. In the closed state of the firestop collar the notch 324C may receive the rear edge of the strip 327 as is shown in Fig. 11, whereby the strip 327 is prevented from being bent outwardly again, e.g. by swelling intumescent material in case of a fire.

Adjacent the free end 327A of the sheet metal strip 327 the catch member 326 has a transverse leg 330 thereby forming with the strip 327 a generally flat L-shape, which in the closed position is substantially parallel to the outer surface of the casing 302. At the corner portion of the L-shape a first lug 331 is formed which extends inwardly perpendicular to the flat L-shape, thereby defining a top edge 332 of the slot 328 in the closed position. The first lug 331 extends beyond an end edge of the second end portion 322. On an upper edge of the transverse leg of the L-shape a second lug 333 is formed, which extends inwardly perpendicular to the flat L-shape. In the second end portion 322 an aperture 335 is formed for receiving the second lug 333.

Retaining tabs 305 are integrally formed on both edges of the casing 302. The retaining tabs 305 extend radially inward and are for retaining the intumescent material in the collar in the axial direction. The retaining tabs 305 maintain the layer of intumescent material within the casing 302 when the firestop collar is mounted around a pipe. When in case of a fire the intumescent material expands, the retaining tabs 305 also partly block the intumescent from expanding in the axial direction of the pipe, whereby the pressure is focussed more in the radial direction where it is intended to go to compress the pipe and close of the passage through the wall.

The first end portion 321 comprises a protrusion 334 which is located at a distance above the tongue 323. At an upper side of the protrusion 334 a retaining tab 305A is formed. In the closed state (cf. Fig. 11) the protrusion 334 extends over the lug 331, and the retaining tab 305A extends over the upper edge of the second end portion 322.

In Fig. 12 another embodiment of a firestop collar is shown. This firestop collar 401 has a casing 402 which is made of a relatively thick sheet metal.

The casing 402 has two casing halves 402A and 402B which each have a first end portion 421 and a second end portion 422. The first end portion 421 of the one casing half 402A is able to connect to the second end portion 422 of the other casing half 402B and vice versa.

The first end portion 421 comprises a tongue 423 with a hook member 424 formed at the end. The second end portion 422 has a catch member 426. In particular the catch member 426 is formed monolithically at a lower edge of the casing 402. The catch member 426 comprises a sheet metal strip 427 which has one free end 427A and one end 427B integrally connected to the casing 402 by a flexible connection portion 429. A lug 431 is formed at a rear edge of the sheet metal strip 427 which extends inwardly perpendicular to the strip 427, thereby defining a top edge 432 of the slot 428 in the closed position. In the second end portion 422 a perforation 435 is made adapted to receive an end of the lug 431. The cooperation of the perforation 435 and the end of the lug 431 prevents the relative movement of the first end portion 421 and second end portion 422 in the axial and the circumferential direction.

Initially the sheet metal strip 427 is inclined with respect to the casing 402. In this way there is a gap defined between the strip 427 and the outer side of the casing 402 such that the hook member 424 of the other end portion 421 can pass the strip 427 without engaging it, in particular the lug 431. After the hook member 424 has passed the strip 427 the user can push and bend the strip 427 towards the outer surface of the casing 402 such that a slot is created between the strip 427 and the outer surface of the casing 402. Furthermore the lug 431 moves behind the hook member 424 and thereby interlocks the first end portion and the second end portion.

Reataining tabs 405 are integrally formed on both edges of the casing 402. The retaining tabs 405 extend radially inward from the edge of the casing 402 and are for retaining the intumescent material in the collar 401 in the axial direction. The retaining tabs 405 maintain the layer of intumescent material within the casing 402 when the firestop collar 401 is mounted around a pipe. When in case of a fire the intumescent material expands, the retaining tabs 405 also partly block the intumescent from expanding in the axial direction of the pipe, whereby the pressure is focussed more in the radial direction where it is intended to go to compress the pipe and close of the passage through the wall.

On the outer side of the collar 401 radial flanges 404 are formed having a bore for passing through a male fastening element to fasten the collar to the wall.

The first end portion 421 furthermore comprises at an upper side a retaining tab 405A. In the closed state (cf. Fig. 12) the retaining tab 405A extends over the upper edge of the second end portion 422.

## Claims

1. Firestop collar (1; 401) for arrangement around a duct (100) at a passage through a partition (200), the firestop collar comprising an outer casing (2; 302; 402) of sheet metal and an inner lining of intumescent material, wherein the outer casing (2; 302; 402) has a first end portion (21; 321; 421) and a second end portion (22; 322; 422) adapted to be mutually connected so as to maintain the firestop collar in a closed position around the duct (100), wherein a locking member is formed integrally with the casing (2; 302; 402) at the first end portion (21; 321; 421) and a catch member (26; 326; 426) is integrally formed with the casing (2; 302; 402) at the second end portion (22; 322; 422), wherein the catch member (26; 326; 426) comprises a sheet metal strip (27; 327; 427) extending spaced apart from the outer surface of the casing (2; 302; 402) to define a slot (28; 328; 428) between the catch member (26; 326; 426) and the outer surface of the casing (2; 302; 402), and wherein the first end portion (2; 302; 402) is adapted to extend through the slot (28; 328; 428) such that the locking member is located beyond the catch member (26; 326; 426) to interlock the first and second end portions in the closed position of the collar, **characterized in that** the sheet metal strip (27; 327; 427) has one free end and one end integrally connected to the outer casing (2; 302; 402) by a flexible connection portion (29; 329; 429) , wherein the locking member comprises a hook member (24; 324; 424) adapted to hook behind a rear end edge of the sheet metal strip (27; 327; 427).

2. Firestop collar according to claim 1, wherein the catch member (26) is formed monolithically at one of an upper or lower edge of the casing (2) and folded over the outer side of the casing (2) to define the slot (8) between the catch member (26) and the outer surface of the casing (2).

3. Firestop collar according to claim 1, wherein the catch member (326; 426) is formed monolithically at one of an upper or lower edge of the casing (302; 402) wherein the flexible connection portion (329; 429) allows it to be folded over the outer side of the casing (302; 402) to define the slot (328; 428) between the catch member (326; 426) and the outer surface of the casing (302; 402).

4. Firestop collar according to any of the preceding claims, wherein the hook member (24; 324) is formed protruding from the outer surface of the casing, and wherein the hook member (24; 324) has a height with respect to the outer surface of the casing (2; 302) which exceeds the width of the slot (28; 328) with respect to the outer surface of the casing (2; 302).

5. Firestop collar according to any of the preceding claims, wherein the first end portion (21; 321; 421) comprises a tongue (23; 323; 423) configured to extend through the slot (28; 328; 428).

6. Firestop collar according to claims 4 and 5, wherein the hook member (24; 324) is formed as a nose formed on an upper or lower edge of the tongue (23; 423) and extending under an angle of 75°-105°, e.g. perpendicular, relative to the outer surface of the casing (2; 302), wherein the nose preferably has a ramp shaped leading edge (24A).

7. Firestop collar according to claim 3, wherein the first end portion (421) comprises a tongue (423) configured to extend through the slot (428), and wherein at an end of the tongue (423) remote from the casing (402) a hook member (424) is formed which is essentially flush with the tongue (423).

8. Firestop collar according to any of the preceding claims, wherein:
- the catch member (26) including the connection portion (29) is elastically deformable; or
- the catch member (326; 426) including the connection portion (329; 429) is plastically deformable.

9. Firestop collar according to any of the claims 1-7, wherein the sheet metal is a spring steel.

10. Firestop collar according to any of the preceding claims, wherein the catch member (26; 326) has adjacent the free end (27A) of the sheet metal strip (27; 327) a transverse leg (30; 330) thereby forming with the strip (27; 327) a flat L-shape, which is substantially parallel to the outer surface of the casing (2; 302).

11. Firestop collar according to claim 10, wherein at the corner portion of the L-shape a first lug (31; 331) is formed which extends inwardly perpendicular to the flat L-shape, thereby defining a top edge of the slot (28; 328) , which first lug (31; 331) extends beyond an end edge of the second end portion (22; 322).

12. Firestop collar according to claim 10 or 11, wherein on an edge of the transverse leg (330) of the L-shape a second lug (333) is formed, which extends inwardly perpendicular to the flat L-shape and wherein in the second end portion (322) an aperture (335) is formed for receiving the second lug (333).

13. Firestop collar according to any of the claims 1-9, wherein at a rear edge of the sheet metal strip (427) a lug (431) is formed which extends inwardly perpendicular to the strip (427) and wherein in the second end portion (422) an aperture (435) is formed for receiving said lug (431), wherein the hook member (424) in the closed position of the collar (401) hooks behind the lug (431).

14. Firestop collar according to any of the preceding claims, wherein on the upper edge of the casing a series of retaining tabs (5; 305; 405) is formed for retaining the intumescent material in the collar in the axial direction, wherein, preferably a retaining tab (5A; 305A; 405A) is formed on the upper edge of the first end portion (21; 321; 421); and wherein , preferably, on the lower edge of the casing a series of retaining tabs (5; 305; 405) is formed for retaining the intumescent material in the collar in the axial direction.

15. Firestop collar according to any of the preceding claims, wherein:
- the firestop collar has one first end portion (21; 321; 421) and one second end portion (22; 322; 422); or
- the firestop collar has two first end portions (21; 321; 421) and two second end portions (22; 322; 422).

## Patentansprüche

1. Brandschutzmanschette (1; 401) zur Anordnung um eine Rohrleitung (100) bei einem Durchgang durch eine Trennwand (200), wobei die Brandschutzmanschette eine äußere Ummantelung (2; 302; 402) aus Metallblech und eine Innenauskleidung aus intumeszentem Material umfasst, wobei die äußere Ummantelung (2; 302; 402) einen ersten Endabschnitt (21; 321; 421) und einen zweiten Endabschnitt (22; 322; 422) aufweist, die dafür ausgelegt sind, wechselseitig miteinander verbunden zu werden, um die Brandschutzmanschette in einer geschlossenen Position um die Rohrleitung (100) zu halten, wobei an dem ersten Endabschnitt (21; 321; 421) ein Verriegelungselement einteilig mit der Ummantelung (2; 302; 402) gebildet ist und an dem zweiten Endabschnitt (22; 322; 422) ein Fangelement (26; 326; 426) einteilig mit der Ummantelung (2; 302; 402) gebildet ist, wobei das Fangelement (26; 326; 426) einen Metallblechstreifen (27; 327; 427) umfasst, der sich beabstandet von der Außenfläche der Ummantelung (2; 302; 402) erstreckt, um einen Spalt (28; 328; 428) zwischen dem Fangelement (26; 326; 426) und der Außenfläche der Ummantelung (2; 302; 402) zu definieren, und wobei der erste Endabschnitt (2; 302; 402) dafür ausgelegt ist, sich derart durch den Spalt (28; 328; 428) zu erstrecken, dass sich das Verriegelungselement jenseits des Fangelements (26; 326; 426) befindet, um den ersten und den zweiten Endabschnitt in der geschlossenen Position der Manschette zu verriegeln, **dadurch gekennzeichnet, dass** der Metallblechstreifen (27; 327; 427) ein freies Ende und ein Ende, das einteilig mit der äußeren Ummantelung (2; 302; 402) durch einen flexiblen Verbindungsabschnitt (29; 329; 429) verbunden ist, aufweist, wobei das Verriegelungselement ein Hakenelement (24; 324; 424) umfasst, das dafür ausgelegt ist, hinter einer hinteren Stirnkante des Metallblechstreifens (27; 327; 427) einzuhaken.

2. Brandschutzmanschette nach Anspruch 1, wobei das Fangelement (26) entweder an einer oberen oder an einer unteren Kante der Ummantelung (2) monolithisch gebildet ist und über die Außenseite der Ummantelung (2) gefaltet ist, um den Spalt (8) zwischen dem Fangelement (26) und der Außenfläche der Ummantelung (2) zu definieren.

3. Brandschutzmanschette nach Anspruch 1, wobei das Fangelement (326; 426) entweder an einer oberen oder an einer unteren Kante der Ummantelung (302; 402) monolithisch gebildet ist, wobei der flexible Verbindungsabschnitt (329; 429) es erlaubt, dass es über die Außenseite der Ummantelung (302; 402) gefaltet wird, um den Spalt (328; 428) zwischen dem Fangelement (326; 426) und der Außenfläche der Ummantelung (302; 402) zu definieren.

4. Brandschutzmanschette nach einem der vorhergehenden Ansprüche, wobei das Hakenelement (24; 324) derart gebildet ist, dass es von der Außenfläche der Ummantelung vorsteht, und wobei das Hakenelement (24; 324) eine Höhe bezüglich der Außenfläche der Ummantelung (2; 302) aufweist, die die Breite des Spalts (28; 328) bezüglich der Außenfläche der Ummantelung (2; 302) überschreitet.

5. Brandschutzmanschette nach einem der vorhergehenden Ansprüche, wobei der erste Endabschnitt (21; 321; 421) eine Zunge (23; 323; 423) umfasst, die konfiguriert ist, sich durch den Spalt (28; 328; 428) zu erstrecken.

6. Brandschutzmanschette nach Anspruch 4 und 5, wobei das Hakenelement (24; 324) als eine Nase gebildet ist, die auf einer oberen oder unteren Kante der Zunge (23; 423) gebildet ist, und sich unter einem Winkel von 75°-105°, z. B. senkrecht relativ zu der Außenfläche der Ummantelung (2; 302) erstreckt, wobei die Nase bevorzugt eine rampenförmige Vorderkante (24A) aufweist.

7. Brandschutzmanschette nach Anspruch 3, wobei der erste Endabschnitt (421) eine Zunge (423) umfasst, die konfiguriert ist, sich durch den Spalt (428) zu erstrecken, und wobei an einem Ende der Zunge (423) entfernt von der Ummantelung (402) ein Hakenelement (424) gebildet ist, das mit der Zunge (423) im Wesentlichen bündig ist.

8. Brandschutzmanschette nach einem der vorhergehenden Ansprüche, wobei:
- das Fangelement (26), das den Verbindungsabschnitt (29) enthält, elastisch verformbar ist; oder
- das Fangelement (326; 426), das den Verbindungsabschnitt (329; 429) enthält, plastisch verformbar ist.

9. Brandschutzmanschette nach einem der Ansprüche 1-7, wobei das Metallblech ein Federstahl ist.

10. Brandschutzmanschette nach einem der vorhergehenden Ansprüche, wobei das Fangelement (26; 326) neben dem freien Ende (27A) des Metallblechstreifens (27; 327) einen Querschenkel (30; 330) aufweist, wodurch er mit dem Streifen (27; 327) eine flache L-Form bildet, die zu der Außenfläche der Ummantelung (2; 302) im Wesentlichen parallel ist.

11. Brandschutzmanschette nach Anspruch 10, wobei an dem Eckabschnitt der L-Form ein erster Vorsprung (31; 331) gebildet ist, der sich senkrecht zu der flachen L-Form einwärts erstreckt, wodurch er eine Oberkante des Spalts (28; 328) definiert, wobei sich der erste Vorsprung (31; 331) über eine Stirnkante der zweiten Endabschnitts (22; 322) hinaus erstreckt.

12. Brandschutzmanschette nach Anspruch 10 oder 11, wobei auf einer Kante des Querschenkels (330) der L-Form ein zweiter Vorsprung (333) gebildet ist, der sich senkrecht zu der flachen L-Form einwärts erstreckt, und wobei in dem zweiten Endabschnitt (322) eine Öffnung (335) zum Aufnehmen des zweiten Vorsprungs (333) gebildet ist.

13. Brandschutzmanschette nach einem der Ansprüche 1-9, wobei an einer Hinterkante des Metallblechstreifens (427) ein Vorsprung (431) gebildet ist, der sich senkrecht zu dem Streifen (427) einwärts erstreckt, und wobei in dem zweiten Endabschnitt (422) eine Öffnung (435) zum Aufnehmen des Vorsprungs (431) gebildet ist, wobei sich das Hakenelement (424) in der geschlossenen Position der Manschette (401) hinter den Vorsprung (431) einhakt.

14. Brandschutzmanschette nach einem der vorhergehenden Ansprüche, wobei auf der Oberkante der Ummantelung in der axialen Richtung eine Reihe von Rückhaltelaschen (5; 305; 405) zum Zurückhalten des intumeszenten Materials in der Manschette gebildet ist, wobei bevorzugt eine Rückhaltelasche (5A; 305A; 405A) auf der Oberkante des ersten Endabschnitts (21; 321; 421) gebildet ist; und wobei bevorzugt auf der Unterkante der Ummantelung in der axialen Richtung eine Reihe von Rückhaltelaschen (5; 305; 405) zum Zurückhalten des intumeszenten Materials in der Manschette gebildet ist.

15. Brandschutzmanschette nach einem der vorhergehenden Ansprüche, wobei:
- die Brandschutzmanschette einen ersten Endabschnitt (21; 321; 421) und einen zweiten Endabschnitt (22; 322; 422) aufweist; oder
- die Brandschutzmanschette zwei erste Endabschnitte (21; 321; 421) und zwei zweite Endabschnitte (22; 322; 422) aufweist.

## Revendications

1. Collier coupe-feu (1 ; 401) destiné à être agencé autour d'un conduit (100) au niveau d'un passage traversant une cloison (200), le collier coupe-feu comprenant une virole extérieure (2 ; 302 ; 402) en tôle et un revêtement intérieur en matériau intumescent, la virole extérieure (2 ; 302 ; 402) étant pourvue d'une première partie extrémité (21 ; 321 ; 421) et d'une deuxième partie extrémité (22 ; 322 ; 422) adaptées à être raccordées entre elles de manière à maintenir le collier coupe-feu dans une position fermée autour du conduit (100), un élément de verrouillage faisant partie intégrante de la virole (2 ; 302 ; 402) au niveau de la première partie extrémité (21 ; 321 ; 421) et un élément formant cliquet (26 ; 326 ; 426) faisant partie intégrante de la virole (2 ; 302 ; 402) au niveau de la deuxième partie extrémité (22 ; 322 ; 422), l'élément formant cliquet (26 ; 326 ; 426) comprenant une bande en tôle (27 ; 327 ; 427) s'étendant à distance de la surface extérieure de la virole (2 ; 302 ; 402) pour définir une fente (28 ; 328 ; 428) entre l'élément formant cliquet (26 ; 326 ; 426) et la surface extérieure de la virole (2 ; 302 ; 402), et la première partie extrémité (2 ; 302 ; 402) étant adaptée à s'étendre à travers la fente (28 ; 328 ; 428) de manière à ce que l'élément de verrouillage se positionne au-delà de l'élément formant cliquet (26 ; 326 ; 426) pour verrouiller entre elles les première et deuxième parties extrémités dans la position fermée du collier ; **caractérisé en ce que** la bande en tôle (27 ; 327 ; 427) est pourvue d'une extrémité libre et d'une extrémité solidarisée à la virole extérieure (2 ; 302 ; 402) par une partie de raccord souple (29 ; 329 ; 429), l'élément de verrouillage comprenant un élément formant crochet (24 ; 324 ; 424) adapté à s'accrocher derrière un bord d'extrémité arrière de la bande en tôle (27 ; 327 ; 427).

2. Collier coupe-feu selon la revendication 1, l'élément format cliquet (26) étant formé d'un seul tenant au niveau d'un bord soit supérieur soit inférieur de la virole (2) et rabattu sur le côté extérieur de la virole (2) pour définir la fente (8) entre l'élément formant cliquet (26) et la surface extérieure de la virole (2).

3. Collier coupe-feu selon la revendication 1, l'élément formant cliquet (326 ; 426) étant formé d'un seul tenant au niveau d'un bord soit supérieur soit inférieur de la virole (302 ; 402), la partie de raccord souple (329 ; 429) permettant son rabattement sur le côté extérieur de la virole (302 ; 402) pour définir la fente (328 ; 428) entre l'élément formant cliquet (326 ; 426) et la surface extérieure de la virole (302 ; 402).

4. Collier coupe-feu selon l'une quelconque des revendications précédentes, l'élément formant crochet (24 ; 324) étant formé en saillie depuis la surface extérieure de la virole, et l'élément formant crochet (24 ; 324) étant pourvu d'une hauteur par rapport à la surface extérieure de la virole (2 ; 302) qui dépasse la largeur de la fente (28 ; 328) par rapport à la surface extérieure de la virole (2 ; 302).

5. Collier coupe-feu selon l'une quelconque des revendications précédentes, la première partie extrémité (21 ; 321 ; 421) comprenant une languette (23 ; 323 ; 423) configurée pour s'étendre à travers la fente (28 ; 328 ; 428).

6. Collier coupe-feu selon les revendications 4 ou 5, l'élément formant crochet (24 ; 324) prenant la forme d'un nez formé sur un bord supérieur ou inférieur de la languette (23 ; 423) et s'étendant en formant un angle compris entre 75° et 105°, par exemple droit, avec la surface extérieure de la virole (2 ; 302), le nez étant de préférence pourvu d'un bord avant en forme de rampe (24A).

7. Collier coupe-feu selon la revendication 3, la première partie extrémité (421) comprenant une languette (423) configurée pour s'étendre à travers la fente (428) et, à une extrémité de la languette (423) distante de la virole (402), un élément formant crochet (424) étant formé sensiblement à fleur de la languette (423).

8. Collier coupe-feu selon l'une quelconque des revendications précédentes,
- l'élément formant cliquet (26) comportant la partie de raccord (29) étant élastiquement déformable ; ou
- l'élément formant cliquet (326 ; 426) comportant la partie de raccord (329 ; 429) étant plastiquement déformable.

9. Collier coupe-feu selon l'une quelconque des revendications 1 à 7, la tôle étant un acier à ressort.

10. Collier coupe-feu selon l'une quelconque des revendications précédentes, l'élément formant cliquet (26 ; 326) étant pourvu, en position adjacente à l'extrémité libre (27A) de la bande en tôle (27 ; 327), d'une patte transversale (30 ; 330) en formant ainsi avec la bande (27 ; 327) une forme en L plate, qui est sensiblement parallèle à la surface extérieure de la virole (2 ; 302).

11. Collier coupe-feu selon la revendication 10, une première oreille (31 ; 331) étant formée au niveau de la partie coin de la forme en L, laquelle s'étend vers l'intérieur perpendiculairement à la forme en L plate, en définissant ainsi un bord haut de la fente (28 ; 328), la première oreille (31 ; 331) s'étendant au-delà d'un bord d'extrémité de la deuxième partie extrémité (22 ; 322).

12. Collier coupe-feu selon la revendication 10 ou 11, une deuxième oreille (333) étant formée sur un bord de la patte transversale (330) de la forme en L, laquelle s'étend vers l'intérieur perpendiculairement à la forme en L plate et une ouverture (335) étant formée dans la deuxième partie extrémité (322) pour recevoir la deuxième oreille (333).

13. Collier coupe-feu selon l'une quelconque des revendications 1 à 9, une oreille (427) étant formée au niveau d'un bord arrière de la bande en tôle (427), laquelle s'étend vers l'intérieur perpendiculairement à la bande (427), et une ouverture (435) étant formée dans la deuxième partie extrémité (422) pour recevoir ladite oreille (431), l'élément formant crochet (424) dans la position fermée du collier (401) s'accrochant derrière l'oreille (431).

14. Collier coupe-feu selon l'une quelconque des revendications précédentes, une série d'onglets de retenue (5 ; 305 ; 405) étant formée sur le bord supérieur de la virole pour retenir le matériau intumescent dans le collier dans la direction axiale, de préférence un onglet de retenue (5A ; 305A ; 405A) étant formé sur le bord supérieur de la première partie extrémité (21 ; 321 ; 421) ; et, de préférence, une série d'onglets de retenue (5 ; 305 ; 405) étant formée sur le bord inférieur de la virole pour retenir le matériau intumescent dans le collier dans la direction axiale.

15. Collier coupe-feu selon l'une quelconque des revendications précédentes,
- le collier coupe-feu étant pourvu d'une seule première partie extrémité (21 ; 321 ; 421) et d'une seule deuxième partie extrémité (22 ; 322 ; 422) ; ou
- le collier coupe-feu étant pourvu de deux premières parties extrémités (21 ; 321 ; 421) et de deux deuxièmes parties extrémités (22 ; 322 ; 422).
